# EUROPÄISCHE PATENTSCHRIFT

(11) **EP 0 977 923 B1**
(45) Veröffentlichungstag und Bekanntmachung des Hinweises auf die Patenterteilung: **14.05.2003**
(21) Anmeldenummer: 97952904.7
(22) Anmeldetag: 09.12.1997
(51) Int. Cl.: E03C 1/05

(54) **SANITÄRE NÄHERUNGSARMATUR**
SANITARY PROXIMITY VALVING
ROBINETTERIE SANITAIRE DE PROXIMITE

(30) Priorität: 10.12.1996 DE 19651132
(43) Veröffentlichungstag der Anmeldung: 09.02.2000
(60) Teilanmeldung: 02017867.9
(73) Patentinhaber: Ideal-Standard GmbH & Co. OHG, 53121 Bonn (DE)
(72) Erfinder: BERGMANN, Konrad, D-54338 Schweich (DE)
(74) Vertreter: Gesthuysen, von Rohr & Eggert
(86) Internationale Anmeldenummer: EP9706867
(87) Internationale Veröffentlichungsnummer: WO98026134

(56) Entgegenhaltungen:
- WO-A-89/09312
- WO-A-94/00645
- WO-A-96/14477
- DE-A- 3 212 468
- DE-U- 8 512 039
- DE-U- 9 211 188
- DE-U- 9 211 577
- GB-A- 2 195 763
- US-A- 3 415 278

## Beschreibung

Die Erfindung betrifft eine sanitäre Näherungsarmatur mit einer zugeordneten, eine Sensoreinrichtung aufweisenden Steuereinrichtung und einer mit der Steuereinrichtung gekoppelten Ventileinrichtung, wobei die Steuereinrichtung nach Erfassung eines Signals durch die Sensoreinrichtung von der einen Seite die Ventileinrichtung zur Freigabe von kälterem Wasser ansteuert, während die Steuereinrichtung nach Erfassung eines Signals durch die Sensoreinrichtung von der anderen Seite die Ventileinrichtung zur Freigabe von wärmerem Wasser ansteuert, wobei die Steuereinrichtung derart ausgebildet ist, daß die nach Erfassung des ersten Signals zuerst eingestellte erste Ventilstellung der Ventileinrichtung für ein vorgegebenes erstes Zeitintervall unabhängig von der Erfassung weiterer Signale im ersten Zeitintervall beibehalten wird und wobei eine Selbstschlußfunktion nach dem Zeitintervall ausgelöst wird.

Eine Näherungsarmatur der eingangs genannten Art ist aus der GB-A-2 195 763 bekannt Die bekannten Näherungsarmaturen, die im industriellen und öffentlichen Bereich eingesetzt werden, haben gegenüber manuell betätigbaren Armaturen verschiedene Benutzungsvorteile, die auch im privaten Bereich von Interesse sind, nämlich
- berührungslose Bedienung
- Wasser- und Energieersparnis
- leichte Reinigung.

Andere Vorteile sind nur im kommerziellen und industriellen Bereich gegeben, nämlich
- Sicherheit gegen Vandalismus
- Wasserersparnis durch Selbstschluß nach einem vorgegebenen Zeitintervall
- Vermeidung von Infektionen.

Obwohl Näherungsarmaturen schon seit langer Zeit im kommerziellen und industriellen Bereich verwendet werden, sind sie im privaten Bereich nicht verbreitet. Einer der Gründe dafür, daß sich Näherungsarmaturen im privaten Bereich bisher nicht durchsetzen konnten, besteht in der vergleichsweise schlechten Handhabung, wenn abwechselnd warmes und kaltes Wasser benötigt wird. Herkömmliche Näherungsarmaturen weisen hierzu einen manuell zu betätigenden Umschaltmechanismus auf und müssen von Hand umgestellt werden, wodurch die Vorteile des berührungslosen Einschaltens wieder aufgehoben werden. Die Bedienung zum Umschalten benötigt dabei mehr Zeit als beispielsweise bei einem Hebelmischer.

Außerdem werden im privaten Bereich häufig Bedienungsfunktionen vom privaten Nutzer benötigt, die mit den bekannten Näherungsarmaturen nicht realisiert werden können, wie beispielsweise die Möglichkeit, zur üblichen Selbstschlußfunktion eine längere Laufzeit für das Wasser wählen oder auch die Armatur ganz abschalten zu können. Darüber hinaus besteht ein systembedingter Nachteil von Näherungsarmaturen, unabhängig davon, ob sie im kommerziellen und industriellen oder im privaten Bereich eingesetzt werden, darin, daß ihre Funktion häufig nicht sicher genug ist, da die Sensoreinrichtung durch Verschmutzung oder durch andere äußere Einflüsse gestört werden kann. Schließlich können auch Veränderungen der elektrischen Bauteile zu Fehlfunktionen führen.

Aufgabe der vorliegenden Erfindung ist es, eine Näherungsarmatur der eingangs genannten Art zur Verfügung zu stellen, bei der sichergestellt ist, daß einem Benutzer während der regulierbaren Dauer seines Waschens immer genug Wasser zur Verfügung gestellt wird.

Diese Aufgabe ist erfindungsgemäß bei einer sanitären Näherungsarmatur der eingangs genannten Art dadurch gelöst, daß die eingestellte erste Ventilstellung für ein vorgegebenes weiteres Zeitintervall beibehalten und nicht in die Schließstellung zurückgestellt wird, wenn kurz vor oder kurz nach Ablauf des ersten oder eines weiteren Zeitintervalls ein Signal von der einen oder der anderen Seite von der Sensoreinrichtung erfaßt wird und daß eine Änderung der Ventilstellung durch Erfassung von Signalen über die Sensoreinrichtung erst möglich ist, nachdem die Ventileinrichtung in die Schließstellung zurückgestellt worden ist.

Weitere Merkmale, Vorteile und Anwendungsmöglichkeiten der vorliegenden Erfindung ergeben sich aus den Unteransprüchen, der nachfolgenden Beschreibung von Ausführungsbeispielen anhand der Zeichnung und der Zeichnung selbst.

Es zeigt
- Fig. 1: eine Seitenquerschnittsansicht einer Näherungsarmatur,
- Fig. 2: eine Seitenansicht einer weiteren Ausführungsform der Näherungsarmatur und
- Fig. 3: eine Unteransicht auf die Näherungsarmatur aus Fig. 1.

Die in den Figuren dargestellte sanitäre Näherungsarmatur 1 weist einen Armaturenkörper 2 mit einem Armaturengehäuse 3 auf. Der Armaturenkörper 2 ist mit einem Armaturensockel 4 und mit einem etwa horizontal verlaufenden Auslaufarm 5 versehen. Die Näherungsarmatur 1 ist im dargestellten Ausführungsbeispiel an einem im einzelnen nicht näher dargestellten Waschbecken 6 befestigt und weist eine im Armaturenkörper 2 geführte Betätigungsstange 7 zur Betätigung eines nicht dargestellten Auslaufschließers des Waschbeckens 6 auf.

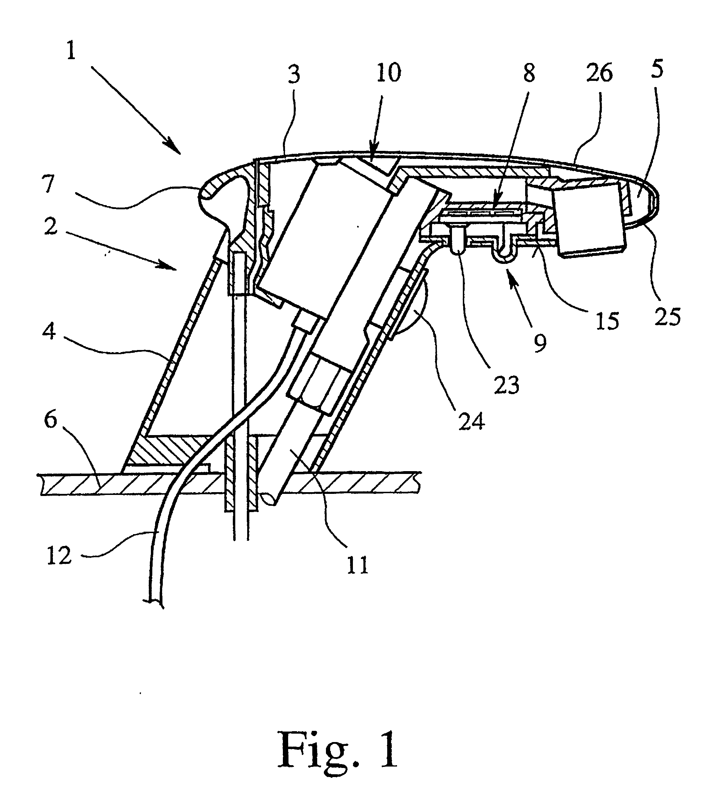

Weiterhin ist die sanitäre Näherungsarmatur 1 mit einer Steuereinrichtung 8 versehen, die wiederum eine Sensoreinrichtung 9 aufweist. Die Steuereinrichtung 8 ist mit einer Ventileinrichtung 10 gekoppelt, die zur Wasserfreigabe von Kalt- und Heißwasser sowie ggf. zur Temperatur- und zur Mengensteuerung dient. Die Ventileinrichtung 10 kann jeweils ein nicht im einzelnen beschriebenes motorbetriebenes Ventil zur Steuerung des Kalt- und Warmwasserdurchflusses aufweisen und weiterhin mit einem Thermostaten versehen sein. Es kann aber auch die übliche Mischtechnik mit Ventilscheiben, die über entsprechende Stellantriebe verschoben werden, zur Anwendung kommen. In jedem Falle wird aber über die Ventileinrichtung 10 der Wasserzufluß aus einer Kaltwasser- und/oder Heißwasserleitung geregelt. In Fig. 1 ist lediglich die Kaltwasserleitung 11 dargestellt.

Die Steuereinrichtung 8, die Sensoreinrichtung 9 und die Ventileinrichtung 10 sind vorliegend batteriebetrieben. Hierzu ist ein entsprechend mit der Ventileinrichtung 10 verbundener, zu einer nicht dargestellten Batterie führender Anschluß 12 vorgesehen, wobei die Batterie beispielsweise im unteren Bereich des Waschbeckens 6 an dessen Unterseite angeordnet sein kann.

Die Betriebsweise der sanitären Näherungsarmatur 1 ist nun derart, daß die Steuereinrichtung 8, bei der es sich um einen Mikroprozessor handelt, nach Erfassung eines Signals durch die Sensoreinrichtung 9 die Ventileinrichtung 10 zur Wasserfreigabe ansteuert. Durch die Steuereinrichtung 8 bzw. die Sensoreinrichtung 9 ist eine Richtungserkennung möglich, je nach dem, ob ein Signal von der einen oder der anderen Seite erfaßt wird. Diese Richtungserkennung ist derart umgesetzt, daß die Steuereinrichtung 8, nachdem ein Signal bei Annäherung, eines Körpers, wie einer Hand, von der einen Seite durch die Sensoreinrichtung 9 erfaßt worden ist, die Ventileinrichtung 10 zur Freigabe von kälterem Wasser ansteuert, während die Steuereinrichtung 8 nach Erfassung eines Signals bei Annäherung einer Hand von der anderen Seite die Ventileinrichtung 10 zur Freigabe von wärmerem Wasser ansteuert. Dieses grundsätzliche Prinzip der Richtungserkennung ist bei der in den Figuren dargestellten Ausführungsform konkret derart realisiert, daß die Steuereinrichtung 8 bei Erfassen eines Signals von rechts die Ventileinrichtung 10 zur Öffnung eines Kaltwasserventils ansteuert, während die Steuereinrichtung 8 nach Erfassung eines Signals von links die Ventileinrichtung 10 zur Öffnung des Kaltwasserventils und eines Heißwasserventils zur Erzielung von Warmwasser vorgegebener Temperatur ansteuert. Das nicht dargestellte Kaltwasserventil ist ebenso wie das nicht dargestellte Warmwasserventil Teil der Ventileinrichtung 10.

Zur Gewährleistung eines ordnungsgemäßen Betriebes der sanitären Näherungsarmatur 1 ist vorgesehen, daß die Steuereinrichtung 8 derart ausgebildet ist, daß die nach Erfassen des ersten Signals zuerst eingestellte erste Ventilstellung der Ventileinrichtung 10 unabhängig von der Erfassung darauf folgender Signale, beispielsweise bei Erfassung von Signalen von der anderen Seite, für ein vorgegebenes erstes Zeitintervall beibehalten wird. Hierdurch wird sichergestellt, daß bei der Benutzung die ursprünglich eingestellte Wassertemperatur nicht ständig durch Auslösung anderer Signale verstellt wird.

Von der Handhabung her ist es dabei besonders vorteilhaft, daß die zuerst eingestellte erste Ventilstellung für ein vorgegebenes weiteres Zeitintervall beibehalten wird, wenn kurz vor oder nach Ablauf des ersten oder eines weiteren Zeitintervalls ein Signal von der Sensoreinrichtung 9 erfaßt wird, und zwar unabhängig davon, ob dieses Signal von der einen oder der anderen Seite erfaßt wird. Die Steuereinrichtung 8 ist dabei derart ausgebildet, daß eine Änderung der ersten Ventilstellung durch Erfassung von Signalen über die Sensoreinrichtung 9 erst möglich ist, wenn das oder die Ventile der Ventileinrichtung 10 nach Ablauf des ersten oder eines weiteren Zeitintervalls in die Schließstellung zurückgestellt worden ist bzw. sind.

Zum einwandfreien Funktionieren der sanitären Näherungsarmatur 1 ist weiterhin vorgesehen, daß ein von der Senoreinrichtung 9 erfaßtes Signal nur dann von der Steuereinrichtung 8 an die Ventileinrichtung 10 zur Ventilbetätigung weitergegeben wird, wenn ein vorgegebener Signalschwellwert überschritten wird. Dieser Signalschwellwert sollte größer sein als der von dem Wasserstrahl beim Betrieb der Näherungsarmatur 1 erzeugte Signalwert, so daß sich kein unerwünschter Dauerbetrieb der Näherungsarmatur 1 durch ständige Signalauslösung aufgrund des Wasserstrahls ergibt.

Bei einer besonders einfachen Ausgestaltung der Sensoreinrichtung 8 weist diese zwei Sensoren 13, 14 auf, von denen der eine Sensor 13 zur Erfassung eines Signals von der rechten Seite, der andere Sensor 14 zur Erfassung eines Signals von der linken Seite vorgesehen ist. Die Sensoren 13, 14 sind dabei abgedichtet im Armaturenkörper 2 der Näherungsarmatur 1 im Bereich des Auslaufarms 5, und zwar an dessen Unterseite 15 vorgesehen. Die Anbringung der Sensoren 13, 14 an der Unterseite 15 des Auslaufarms 5 verhindert eine übermäßige Verschmutzung der Sensoren 13, 14. Auch wird die Wahrscheinlichkeit einer absichtlichen Beschädigung der Sensoren 13, 14 wegen der verdeckten Anordnung weitgehend verringert.

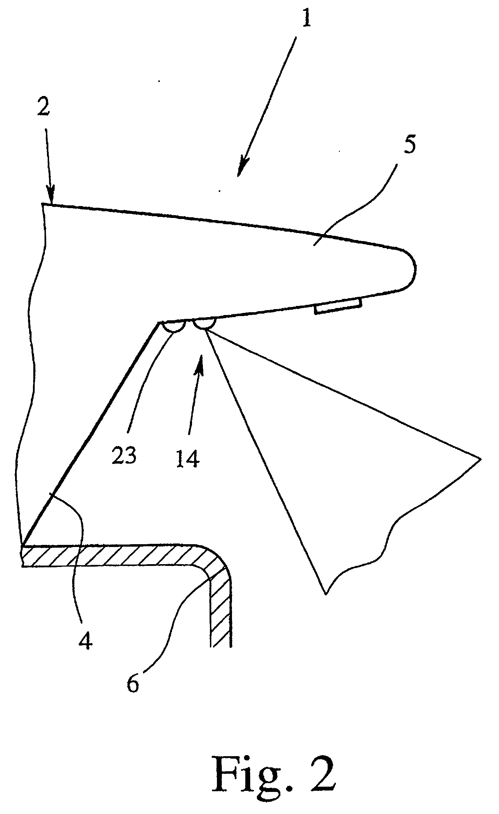

Die an der Unterseite 15 des Auslaufarms 5 angeordneten Sensoren 13, 14 sind derart nach unten gerichtet im Armaturenkörper 2 angeordnet, daß im Einbauzustand der Näherungsarmatur 1, wie dies beispielsweise in Fig. 2 dargestellt ist, von dem Waschbecken 6 ein sogenanntes Referenzsignal erzeugt und von der Steuereinrichtung 8 zur Abgleichung der relativen Empfindlichkeit der Sensoren 13, 14 untereinander verwendet wird. Hierdurch ergibt sich die Möglichkeit, bei Nichtbenutzung der Näherungsarmatur 1 einen Abgleich der Sensorsignale zu erhalten. Es ist festgestellt worden, daß, wenn ein Abgleich nicht ständig vorgenommen wird, es nicht möglich ist, über längere Zeit die Einschaltzonen der Sensoren 13, 14 für warm und kalt an gleicher Stelle zu halten. Um eine sichere Richtungserkennung zu erhalten, ist im dargestellten Ausführungsbeispiel folgende Auswertung des Abgleichs vorgesehen:

Wird die sanitäre Näherungsarmatur 1 nicht benutzt, werden ständig in zeitlich vorgegebenen, vorzugsweise periodischen Abständen die Reflektionswerte des Sensors 13 und des Sensors 14 ermittelt. Die Signale der Sensoren 13, 14 werden verstärkt und von einem nicht dargestellten Analog-Digital-Wandler der Steuereinrichtung 8 in z. B. 512 Schritten aufgelöst. Es versteht sich, daß natürlich auch eine höhere oder aber auch eine geringere Auflösung verwendet werden kann. Die Signalschwellwerte für die Aktivierung der Ventileinrichtung 10 werden in einem festen Verhältnis zu den Reflektionssignalen festgelegt. Dieser Faktor bzw. dieses Verhältnis kann z. B. zwei betragen. Nur solche Signale, die von der Sensoreinrichtung 9 erfaßt werden und um das vorgegebene Verhältnis größer sind als die Ruhesignale, führen zu einer Aktivierung der Näherungsarmatur 1.

Durch die ständige Erneuerung der Ruhesignalwerte der Sensoren 13, 14 bleibt der Schaltpunkt für die beiden Seiten, d. h. für rechts und links, stets symmetrisch zur Mitte der Sensoreinrichtung 9 orientiert. Auch der Abstand zum Auslauf der Näherungsarmatur 1 ist hierdurch festgelegt. Änderungen der Empfindlichkeit der einzelnen Meßkreise von kalt und warm haben keinen Einfluß. Des weiteren können Beeinträchtigungen durch Driften der elektronischen Bauteile, Änderungen der Versorgungsspannung und Verschmutzungen der Sensoren 13, 14 so eliminiert werden. Weichen die Ruhesignale zu sehr voneinander ab, kann ein akustisches und/oder optisches Wartungssignal über eine im einzelnen nicht dargestellte Anzeigeeinrichtung der Näherungsarmatur 1 gegeben werden.

Die Sensoreinrichtung 9 zeichnet sich vorliegend durch eine besonders einfache Ausgestaltung aus. Im dargestellten Ausführungsbeispiel sind die Sensoren 13, 14 als Infrarotsensoren ausgebildet, wobei zwei Empfangsdioden 16, 17 und nur eine zwischen den Empfangsdioden 16, 17 angeordnete Sendediode 18 vorgesehen sind. Der Sensor 13 wird dabei von der Empfangsdiode 16 und der Sendediode 18 gebildet, während der Sensor 14 von der Empfangsdiode 17 und der Sendediode 18 gebildet wird.

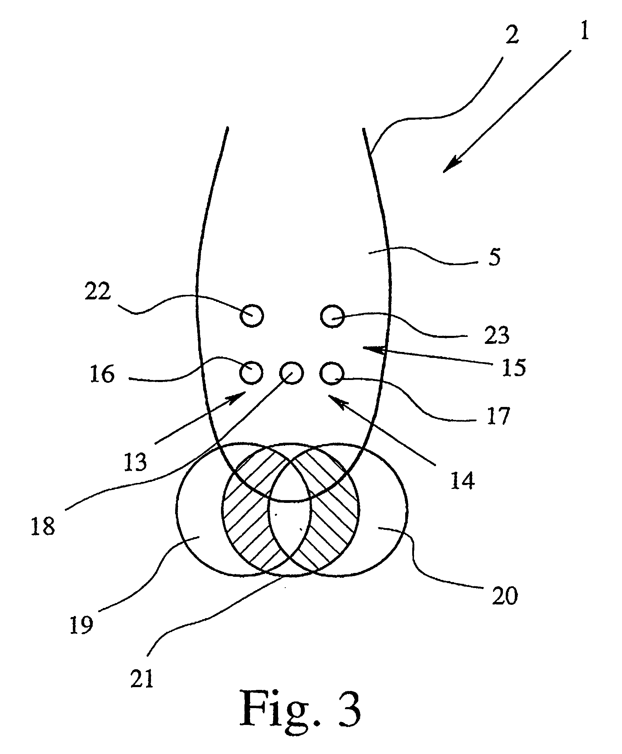

In Fig. 3 sind die Empfangskeulen 19, 20 der Empfangsdioden 16, 17 sowie die Sendekeule 21 der Sendediode 18 dargestellt. In den Bereichen, in denen sich die Empfangskeulen 19, 20 mit der Sendekeule 21 überschneiden, führt das Erfassen eines Signals bei Überschreiten des Signalschwellwertes zu einer Aktivierung der sanitären Näherungsarmatur 1. Die Ausrichtung der aus dem Auslaufarm 5 herausragenden Empfangsdioden 16, 17 und der Sendediode 18 sollte 45° ± 15° nach vorn betragen und zwar, wie bereits beschrieben, derart, daß das Waschbecken 6 angestrahlt wird und so die zuvor erwähnten Ruhesignale zur Abgleichung der beiden Sensoren 13, 14 verwendet werden können. Es darf darauf hingewiesen werden, daß es natürlich auch möglich ist, daß die Sensoren 13, 14 bzw. die Empfangsdiode 16, 17 und die Sendediode 18 direkt nach unten auf das Waschbecken 6 oder aber beispielsweise auf den Armaturensockel 4 gerichtet sein können, um den zuvor beschriebenen Abgleich zu erzielen.

Um den Handhabungskomfort und die Bedienungsmöglichkeiten der Näherungsarmatur 1 weiter zu verbessern, sind am Armaturenkörper 2, und zwar im Bereich der Sensoren 13, 14, zwei mit der Steuereinrichtung 8 gekoppelte Bedienelemente 22, 23 vorgesehen. Hierbei handelt es sich um zwei Tasten bzw. Druckschalter. Die Bedienelemente 22, 23 sind wie auch die Empfangsdioden 16, 17 und die Sendediode 18 an der Unterseite 15 des Auslaufarms 5 vorgesehen und ragen über die Unterseite 15 hinaus. Sie sind in gleicher Weise wie die Empfangsdioden 16, 17 und die Sendediode 18 gegenüber dem Auslaufarm 5 abgedichtet. Die Anordnung der Bedienelemente 22, 23 an der Unterseite 15 des Auslaufarms 5 bringt genau die gleichen Vorteile, die sich auch durch die Anordnung der Empfangsdioden 16, 17 und die Sendediode 18 an der Unterseite 15 des Auslaufarms 5 ergeben und auf die zuvor bereits hingewiesen worden ist. Obwohl im dargestellten Ausführungsbeispiel die Bedienelemente 22, 23 hinter den Sensoren 13, 14 angeordnet sind, könnte auch eine Anordnung vor den Sensoren 13, 14 gewählt werden. Dies hat beispielsweise den Vorteil, daß in einfacher Weise eine Betätigung beider Bedienelemente 22, 23 möglich ist, ohne daß die Näherungsarmatur 1 über die Sensoreinrichtung 9 aktiviert wird.

Die Bedienelemente 22, 23 sind vor allem bei Anwendung der sanitären Näherungsarmatur 1 im privaten Bereich wichtig. Bei Betätigung des rechten Bedienelements 22 wird die Ventileinrichtung 10 zur Öffnung des Kaltwasserventils für ein vorgegebenes Zeitintervall angesteuert, während bei Betätigung des linken Bedienelementes 23 die Ventileinrichtung 10 zur Öffnung des Kaltwasserventils und des Heißwasserventils für ein vorgegebenes Zeitintervalls zur Erzielung von Warmwasser vorgegebener Temperatur angesteuert wird. Die durch die Bedienelemente 22, 23 eingestellte Ventilstellung wird erst dann wieder deaktiviert, wenn das vorgegebene Zeitintervall, beispielsweise eine Minute, abgelaufen ist oder aber durch Betätigen desselben oder auch des anderen Bedienelementes 22, 23 innerhalb des Zeitintervalls.

Des weiteren ist bei der dargestellten Ausführungsform vorgesehen, daß bei gleichzeitiger Betätigung beider Bedienelemente 22, 23 die Sensoreinrichtung 9 deaktiviert wird. Dies ist deshalb wichtig, damit beim Reinigen des Waschbeckens 6 und/oder der sanitären Näherungsarmatur 1 verhindert wird, daß die Sensoreinrichtung 9 ständig anspricht. Nach ihrer Deaktivierung wird die Sensoreinrichtung 9 nach einer vorgegebenen Zeit automatisch wieder aktiviert. Alternativ oder in Kombination dazu kann auch vorgesehen sein, daß die Sensoreinrichtung 9 durch Betätigung wenigstens eines Bedienelements 22, 23 wieder aktiviert wird.

Bei privater Nutzung können die Bedienelemente 22, 23 auch zur Bedienung bzw. Aktivierung der Näherungsarmatur 1 herangezogen werden, wenn ein Defekt an der Sensoreinrichtung 9 vorliegen sollte.

Bei der zuvor beschriebenen sanitären Näherungsarmatur 1 ist es so, daß diese eine konstante Durchflußmengenrate hat, also eine vorbestimmte Menge an Wasser nach Aktivierung geliefert wird. Auch die Temperatur des Warmwassers hat einen bestimmten vorgegebenen Wert. Um sowohl die Temperatur des Warmwassers als auch die Menge ändern zu können, kann sowohl zur Temperatureinstellung des Warmwassers als auch zur Mengeneinstellung des zu liefernden Wassers jeweils ein Einstellelement vorgesehen sein. Ein Temperatureinstellelement 24 ist in Fig. 1 dargestellt.

Wie sich aus Fig. 1 ergibt, ist das Armaturgehäuse 2 zweiteilig ausgebildet; es weist einen nach oben hin geöffneten Gehäuseteil 25 und einen darauf aufsetzbaren Deckel 26 auf. Diese Zweiteiligkeit des Armaturengehäuses 2 hat den Vorteil, daß es hierdurch in besonders einfacher Weise möglich ist, die Sensoreinrichtung 9 und ggf. auch die Steuereinrichtung 8 im Hohlraum des Auslaufarms 5 anzuordnen. Im Reparaturund Wartungsfall ist hierdurch eine gute und einfache Zugänglichkeit gegeben. Es versteht sich natürlich, daß der Deckel 26 gegenüber dem Gehäuseteil 25 nach dem Aufsetzen entsprechend abgedichtet ist.

Des weiteren kann bei der Näherungsarmatur 1 eine nicht näher dargestellte Anzeigeeinrichtung zur Anzeige der eingestellten Wassertemperatur vorgesehen sein, wobei es sich anbietet, entsprechende Leuchtdioden im Deckel 26 oder zwischen dem Deckel 26 und dem Armaturenkörper 2 anzuordnen.

Die sanitäre Näherungsarmatur 1 kann natürlich auch im nicht-privaten Bereich eingesetzt werden. Ist die Steuerung von zwei Temperaturen hierbei nicht erwünscht, so können die zwei Sensoren redundant arbeiten und damit die Betriebssicherheit erheblich steigern. Insbesondere ist eine Erkennung von Sensorstörungen möglich, bevor die Näherungsarmatur ihre Funktion einstellt. Eine Wartung kann daher rechtzeitig erfolgen. In der vorgenannten Anwendung lösen Überschreitungen des Signalschwellwertes des einen oder des anderen Sensors stets die gleiche Temperatur aus.

## Patentansprüche

1. Sanitäre Näherungsarmatur (1) mit einer zugeordneten, eine Sensoreinrichtung (9) aufweisenden Steuereinrichtung (8) und einer mit der Steuereinrichtung (8) gekoppelten Ventileinrichtung (10), wobei die Steuereinrichtung (8) nach Erfassung eines Signals durch die Sensoreinrichtung (9) von der einen Seite die Ventileinrichtung (10) zur Freigabe von kälterem Wasser ansteuert, während die Steuereinrichtung (8) nach Erfassung eines Signals durch die Sensoreinrichtung (9) von der anderen Seite die Ventileinrichtung (10) zur Freigabe von wärmerem Wasser ansteuert, wobei die Steuereinrichtung (8) derart ausgebildet ist, daß die nach Erfassung des ersten Signals zuerst eingestellte erste Ventilstellung der Ventileinrichtung (10) für ein vorgegebenes erstes Zeitintervall unabhängig von der Erfassung weiterer Signale im ersten Zeitintervall beibehalten wird und wobei eine Selbstschlußfunktion nach dem Zeitintervall ausgelöst wird, **dadurch gekennzeichnet, daß** die eingestellte erste Ventilstellung für ein vorgegebenes weiteres Zeitintervall beibehalten und nicht in die Schließstellung zurückgestellt wird, wenn kurz vor oder kurz nach Ablauf des ersten oder eines weiteren Zeitintervalls ein Signal von der einen oder der anderen Seite von der Sensoreinrichtung (9) erfaßt wird und daß eine Änderung der Ventilstellung durch Erfassung von Signalen über die Sensoreinrichtung (9) erst möglich ist, nachdem die Ventileinrichtung (10) in die Schließstellung zurückgestellt worden ist.

2. Näherungsarmatur nach Anspruch 1, **dadurch gekennzeichnet, daß** ein von der Sensoreinrichtung (9) erfaßtes Signal nur dann von der Steuereinrichtung (8) an die Ventileinrichtung (10) zur Ventilbetätigung weitergegeben wird, wenn ein vorgegebener Signalschwellwert überschritten wird, und der Signalschwellwert größer ist als der von dem Wasserstrahl der Näherungsarmatur (1) erzeugte Signalwert.

3. Sanitäre Näherungsarmatur nach Anspruch 1 oder 2, **dadurch gekennzeichnet, daß** die Steuereinrichtung (8) nach Erfassung eines Signals von der einen Seite die Ventileinrichtung (10) zur Öffnung eines Kaltwasserventils ansteuert, während die Steuereinrichtung (8) nach Erfassung eines Signals von der anderen Seite die Ventileinrichtung (10) zur Öffnung eines Heißwasserventils und ggf. des Kaltwasserventils zur Erzielung von Warmwasser vorgegebener Temperatur ansteuert.

4. Näherungsarmatur nach einem der Ansprüche 1 bis 3, **dadurch gekennzeichnet, daß** die Sensoreinrichtung (9) wenigstens zwei Sensoren (13, 14) aufweist, von denen der eine Sensor (13) zur Erfassung eines Signals von der einen Seite und der andere Sensor (14) zur Erfassung eines Signals von der anderen Seite vorgesehen ist.

5. Näherungsarmatur nach Anspruch 4, **dadurch gekennzeichnet, daß** die Sensoren, (13, 14) abgedichtet im Armaturenkörper (2) der Näherungsarmatur (1) im Bereich eines Auslaufarms (5), vorzugsweise an dessen Unterseite (15) angeordnet sind.

6. Näherungsarmatur nach Anspruch 4 oder 5, **dadurch gekennzeichnet, daß** die Sensoren (13, 14) derart nach unten gerichtet im Armaturenkörper (2) angeordnet sind, daß im Einbauzustand der Näherungsarmatur (1) von einem Waschbecken (6) ein Signal erzeugt, von der Sensoreinrichtung (9) erfaßt und von der Steuereinrichtung (8) zur Abgleichung der relativen Empfindlichkeit der Sensoren (13, 14) untereinander verwendet wird und daß, vorzugsweise, eine ständige Abgleichung der Sensoren (13, 14) in zeitlich vorgegebenen Abständen erfolgt

7. Näherungsarmatur nach einem der Ansprüche 4 bis 6, **dadurch gekennzeichnet, daß** die Sensoren (13, 14) als Infrarotsensoren ausgebildet sind und daß, vorzugsweise, zwei Empfangsdioden (16, 17) und nur eine, vorzugsweise zwischen den Empfangsdioden (16, 17) angeordnete Sendediode (18) vorgesehen ist.

8. Näherungsarmatur nach einem der Ansprüche 1 bis 7, **dadurch gekennzeichnet, daß** am Armaturenkörper (2), im Bereich der Sensoren (13, 14) an der Unterseite (15) eines Auslaufarms (5), mindestens zwei mit der Steuereinrichtung (8) gekoppelte Bedienelemente (22, 23), beispielsweise in Form von tastenartigen Druckschaltern, vorgesehen sind und daß, vorzugsweise, bei Betätigung eines Bedienelements (22) die Ventileinrichtung (10) zur Öffnung des Kaltwasserventils für ein vorgegebenes Zeitintervall angesteuert wird, während bei Betätigung eines anderen Bedienelements (23) die Ventileinrichtung (10) zur Öffnung des Heißwasserventils und ggf. des Kaltwasserventils für ein vorgegebenes Zeitintervall zur Erzielung von Warmwasser vorgegebener Temperatur angesteuert wird.

9. Näherungsarmatur nach Anspruch 8, **dadurch gekennzeichnet, daß** durch Betätigen desselben oder eines Bedienelementes (22, 23) innerhalb des Zeitintervalls die Ventileinrichtung (10) in die Schließstellung zurückgestellt wird.

10. Näherungsarmatur nach Anspruch 8 oder 9, **dadurch gekennzeichnet, daß** bei gleichzeitiger Betätigung beider Bedienelemente (22, 23) die Sensoreinrichtung (9) deaktiviert wird und daß, vorzugsweise, die Sensoreinrichtung (9) nach ihrer Deaktivierung nach einer vorgegebenen Zeitdauer oder durch Betätigung wenigstens eines Bedienelementes (22, 23) wieder einschaltbar ist

11. Näherungsarmatur nach einem der Ansprüche 8 bis 10, **dadurch gekennzeichnet, daß** wenigstens ein weiteres Bedienelement, vorzugsweise in Form eines tastenartigen Druckschalters und/oder eines Drehschalters, zur Einstellung der Menge des Wassers und/oder der Temperatur des Warmwassers vorgesehen ist.

12. Näherungsarmatur nach einem der Ansprüche 1 bis 11, **dadurch gekennzeichnet, daß** ein Armaturgehäuse (3) zumindest zweiteilig ausgebildet ist und einen nach oben hin geöffneten Gehäuseteil (25) und einen darauf aufsetzbaren Deckel (26) aufweist und daß, vorzugsweise, die Sensoreinrichtung (9) und ggf. die Steuereinrichtung (8) in einem Auslaufarm (5) angeordnet sind.

13. Näherungsarmatur nach einem der Ansprüche 1 bis 12, **dadurch gekennzeichnet, daß** eine vorzugsweise Leuchtdioden aufweisende Anzeigeeinrichtung zur Anzeige der eingestellten Wassertemperatur vorgesehen ist.

## Claims

1. Sanitary proximity fixture (1) with an assigned control means (8) which has a sensor means (9) and a valve means (10) which is coupled to the control means (8), after acquisition of a signal by the sensor means (9) the control means (8) triggering the valve means (10) to release water, wherein the sensor means (9) has at least two sensors (13, 14), of which there is one sensor (13) for acquiring a signal from one side of the fixture, and the other sensor (14) is provided to acquire a signal from the other side of the fixture; wherein the control means (8), after acquisition of a signal from said one side of the fixture, triggers the valve means (10) for release of colder water, while the control means (8), after acquisition of a signal from the other side of the fixture, triggers the valve means (10) for release of warmer water; and wherein the control means (8) is made such that the valve position of the valve means (10) which was set at first after acquiring the first signal regardless of the acquisition of other signals in the first time interval is preserved for a given first time interval, **characterized in that** the set first valve position is preserved for another given time interval, if shortly before or after the first or another time interval has expired a signal from one side or the other is acquired by the sensor means (9), and wherein a change of the valve position is possible by acquiring via the sensor means (9) only if the valve means (10) has been reset into the closed position after the first or another time interval has expired.

2. Proximity fitting according to claim 1, **characterized in that** a signal acquired by the sensor means (9) is relayed from the control means (8) to the valve means (10) for valve actuation only when a stipulated signal threshold value is exceeded, and the signal threshold value is greater than the signal value generated by the water jet of the proximity fixture (1).

3. Proximity fitting according to claim 1 or 2, **characterized in that** the control means (8) triggers the valve means (10) for opening a hot water valve and optionally the cold water valve after a signal is acquired from the left to obtain warm water of a stipulated temperature.

4. Proximity fitting according to any one of claims 1 to 3, **characterized in that** the sensor means (9) has at least two sensors (13, 14) of which there is one sensor (13) for acquiring a signal from one side, and the other sensor (14) is provided to acquire a signal from the other side.

5. Proximity fitting according to claim 4, **characterized in that** the sensors (13, 14) sealed in the body (2) of the proximity fixture (1) are located in the area of a drain arm (5), preferably on its bottom (15).

6. Proximity fitting according to claim 4 or 5, **characterized in that** the sensors (13, 14) are located pointed downward in the body (2) of the fixture such that in the installation state of the proximity fixture (1) the wash basin (6) produces a signal which is acquired by the sensor means (9) and which is used by the control means (8) for compensation of the relative sensitivity of the sensors (13, 14) among each other, and wherein preferably continuous balancing of the sensors (13, 14) takes place at stipulated time intervals.

7. Proximity fitting according to any one of claims 4 to 6, **characterized in that** the sensors (13, 14) are made as infrared sensors and that there are preferably two receiving diodes (16, 17) and only one transmitting diode (18) which is located preferably between the receiving diodes (16, 17).

8. Proximity fitting according to any one of claims 1 to 7, **characterized in that** on the body (2) of the fixture, especially in the area of the sensors (13, 14) on the bottom (15) of a drain arm (5) there are preferably two controls (22, 23) which are coupled to the control means (8) for example in the form of button-like pressure switches, and that preferably when one control (22) is activated, the valve means (10) is triggered to open the cold water valve for a stipulated time interval, while when the other control (23) is activated, the valve means (10) is triggered for opening the hot water valve and optionally the cold water valve for a stipulated time interval to obtain warm water of a stipulated temperature.

9. Proximity fitting according to claim 8, **characterized in that** by actuating the latter or a control (22, 23) within the time interval, the valve means (10) is reset into the closed position.

10. Proximity fitting according to claim 8 or 9, **characterized in that** with simultaneous activation of the two controls (22, 23), the sensor means (9) is deactivated and that preferably after its deactivation, the sensor means (9) can be turned on again after its deactivation after a stipulated time interval or by actuating at least one control (22, 23).

11. Proximity fitting according to any one of claims 8 to 10, **characterized in that** there is at least one other control, preferably in the form of a button-like pressure switch or rotary switch, for setting the amount of water and/or the temperature of the warm water.

12. Proximity fitting according to any one of claims 1 to 11, **characterized in that** the fixture housing (3) is made in at least two parts and it has a housing part (25) which is open to the top and a cover (26) which can be placed thereon, and that preferably the sensor means (9) and optionally the control means (8) are located in a drain arm (5).

13. Proximity fitting according to any one of claims 1 to 12, **characterized in that** there is a display means which preferably has light-emitting diodes for display of the set water temperature.

## Revendications

1. Robinet sanitaire réagissant à la proximité (1), auquel est associé un dispositif de commande (8) présentant un dispositif de capteurs (9) et comportant un dispositif de vannes (10) couplé au dispositif de commande (8), le dispositif de commande (8) commandant le dispositif de vannes (10) pour libérer de l'eau froide après détection d'un signal par le dispositif de capteurs (9) d'un côté, tandis que le dispositif de commande (8) commande le dispositif de vannes (10) pour libérer de l'eau chaude après détection d'un signal par le dispositif de capteurs (9) de l'autre côté, le dispositif de commande (8) étant configuré de manière à ce que la première position d'abord réglée des vannes du dispositif de vannes (10) soit maintenue pendant un premier laps de temps prédéfini indépendamment de la détection d'autres signaux pendant le premier laps de temps et une fonction d'auto-fermeture étant déclenchée après le laps de temps, **caractérisé en ce que** la première position réglée de la vanne est maintenue pendant un laps de temps supplémentaire prédéfini et n'est pas remise en position de fermeture si, peu avant ou peu après que le premier laps de temps ou qu'un laps de temps supplémentaire se soit écoulé, un signal est détecté d'un côté ou de l'autre par le dispositif de capteurs (9), et qu'une modification de la position des vannes par détection de signaux par le dispositif de capteurs (9) n'est possible qu'une fois que le dispositif de vannes (10) a été remis en position de fermeture.

2. Robinet réagissant à la proximité selon la revendication 1, **caractérisé en ce qu'**un signal détecté par le dispositif de capteurs (9) n'est transmis par le dispositif de commande (8) au dispositif de vannes (10) pour actionner les vannes que si un seuil de valeur de signal prédéfini est dépassé et que le seuil de valeur de signal est supérieur à la valeur du signal émis par le jet d'eau du robinet réagissant à la proximité (1).

3. Robinet réagissant à la proximité selon la revendication 1 ou 2, **caractérisé en ce que** le dispositif de commande (8) commande le dispositif de vannes (10) pour ouvrir une vanne d'eau froide après détection d'un signal d'un côté, tandis que le dispositif de commande (8) commande le dispositif de vannes (10) pour ouvrir une vanne d'eau chaude et le cas échéant de la vanne d'eau froide pour obtenir de l'eau chaude à une température prédéfinie après détection d'un signal de l'autre côté.

4. Robinet réagissant à la proximité selon une des revendications 1 à 3, **caractérisé en ce que** le dispositif de capteurs (9) présente au moins deux capteurs (13, 14), dont un capteur (13) est prévu pour la détection d'un signal d'un côté et l'autre capteur (14) pour la détection d'un signal de l'autre côté.

5. Robinet réagissant à la proximité selon la revendication 4, **caractérisé en ce que** les capteurs (13, 14) sont disposés de manière étanche dans le corps du robinet (2) du robinet réagissant à la proximité (1) dans la zone d'un bras d'écoulement (5), de préférence sur son côté inférieur (15).

6. Robinet réagissant à la proximité selon la revendication 4 ou 5, **caractérisé en ce que** les capteurs (13, 14) sont disposés orientés vers le bas dans le corps du robinet (2) de manière à ce que, en position montée du robinet réagissant à la proximité (1) un signal est émis par un lavabo (6), détecté par le dispositif de capteurs (9) et est utilisé par le dispositif de commande (8) pour équilibrer la sensibilité relative mutuelle des capteurs (13, 14) et que, de préférence, un équilibrage constant des capteurs (13, 14) a lieu à des intervalles de temps prédéfinis.

7. Robinet réagissant à la proximité selon une des revendications 4 à 6, **caractérisé en ce que** les capteurs (13, 14) se présentent sous forme de capteurs infrarouges et que de préférence deux diodes réceptrices (16, 17) et seulement une diode émettrice (18), disposée de préférence entre les diodes réceptrices (16, 17), sont prévues.

8. Robinet réagissant à la proximité selon une des revendications 1 à 7, **caractérisé en ce que**, sur le corps du robinet (2), dans la zone des capteurs (13, 14), sur le côté inférieur (15) d'un bras d'écoulement (5), au moins deux éléments de commande couplés avec le dispositif de commande (8), par exemple sous forme de boutons-poussoirs en forme de touches, sont prévus et que, de préférence, lors de l'actionnement d'un élément de commande (22), le dispositif de vannes (10) est commandé pour ouvrir la vanne d'eau froide pendant un laps de temps prédéfini, tandis que, lors de l'actionnement d'un autre élément de commande (23), le dispositif de vannes (10) est commandé pour ouvrir la vanne d'eau chaude et le cas échéant la vanne d'eau froide pendant un laps de temps prédéfini afin d'obtenir de l'eau chaude à une température prédéfinie.

9. Robinet réagissant à la proximité selon la revendication 8, **caractérisé en ce que** le dispositif de vannes (10) est remis en position de fermeture par actionnement de celui-ci ou d'un élément de commande (22, 23) au cours du laps de temps.

10. Robinet réagissant à la proximité selon la revendication 8 ou 9, **caractérisé en ce que**, en cas d'actionnement simultané des deux éléments de commande (22, 23), le dispositif de capteurs (9) est désactivé et que, de préférence, le dispositif de capteurs (9) peut être, après sa désactivation, réactivé après un temps prédéfini ou par actionnement d'au moins un élément de commande (22, 23).

11. Robinet réagissant à la proximité selon une des revendications 8 à 10, **caractérisé en ce qu'**au moins un élément de commande supplémentaire, de préférence sous forme d'un bouton-poussoir en forme de touche et/ou d'un sélecteur rotatif, est prévu pour régler la quantité d'eau et/ou la température de l'eau chaude.

12. Robinet réagissant à la proximité selon une des revendications 1 à 11, **caractérisé en ce qu'**un boîtier de robinet (3) est formé d'au moins deux parties et présente une partie supérieure de boîtier ouverte vers le haut (25) et un couvercle pouvant être posé dessus (26) et que le dispositif de capteurs (9) et le cas échéant le dispositif de commande (8) sont de préférence disposés dans un bras d'écoulement (5).

13. Robinet réagissant à la proximité selon une des revendications 1 à 12, **caractérisé en ce qu'**un dispositif d'affichage servant à afficher la température d'eau réglée et présentant de préférence des diodes luminescentes est prévu.
